# EUROPÄISCHE PATENTSCHRIFT

(11) **EP 1 767 337 B1**
(45) Veröffentlichungstag und Bekanntmachung des Hinweises auf die Patenterteilung: **24.03.2010**
(21) Anmeldenummer: 06119750.5
(22) Anmeldetag: 30.08.2006
(51) Int. Cl.: B29D 30/24, B29D 30/26, B29D 30/36

(54) **Verfahren und Vorrichtung zum Aufbauen eines Radialreifens**
Method and device for constructing a radial tyre
Procédé et dispositif pour fabriquer un pneu radial

(30) Priorität: 23.09.2005 DE 102005045425
(43) Veröffentlichungstag der Anmeldung: 28.03.2007
(73) Patentinhaber: Continental Reifen Deutschland GmbH, 30165 Hannover (DE)
(72) Erfinder: Thomfohrde, Claudia, 38547, Leiferde (DE); Mauruschat, Rainer, 30826, Garbsen (DE); Ludwig, Jens, 30173, Hannover (DE); Winkler, Jens, 30173, Hannover (DE)
(74) Vertreter: Finger, Karsten

(56) Entgegenhaltungen:
- EP-A- 0 433 974
- EP-A- 0 465 828
- EP-A- 0 498 183
- EP-A- 1 284 203
- DE-C1- 19 918 523
- GB-A- 997 253
- US-A1- 2001 008 158

## Beschreibung

Die Erfindung betrifft ein Verfahren zum Aufbauen eines Radialreifens mit einer luftdichten Innenschicht, zumindest einer Karkasseinlage, Wulstkernen mit Kernprofilen, Seitenwänden, einem Laufstreifen und einem mindestens zwei Gürtellagen sowie eine Bandage aufweisenden Gürtelverband, wobei die Gürtellagen zunächst auf einer expandierbaren, zylindrischen Gürteltrommel zylindrisch aufgebaut und gespleißt werden und anschließend zu einer zweiten, expandierbaren Gürteltrommel transferiert werden.

Die Erfindung betrifft ferner eine Vorrichtung zum Aufbauen eines Radialreifens mit einer luftdichten Innenschicht, einer Karkasseinlage, Wulstkernen mit Kemprofilen, Seitenwänden, einem Laufstreifen und einem mindestens zwei Gürtellagen sowie eine Bandage aufweisenden Gürtelverband, welche Vorrichtung eine Gürtelstation mit zwei expandierbaren Gürteltrommeln aufweist, von welchen die eine zylindrisch ausgeführt ist.

Bei der konventionellen Herstellung von Luftreifen werden Reifenaufbautrommeln verwendet, auf welchen einzelne Reifenbauteile in unvulkanisierter Form aufgebracht bzw. aufgewickelt werden. Die Reifenbauteile werden über gesonderte Transport- und Fördereinrichtungen den Reifenaufbautrommeln zugeführt und in der erwünschten Position aufgelegt.

Parallel zum Aufbau der Reifenkarkasse auf einer Aufbautrommel wird bei bestimmten Reifentypen ein Verbund aus Gürtellagen, Bandage und Laufstreifen auf einer Gürteltrommel aufgebaut und an einer Bombierstation mit der Reifenkarkasse verbunden. Bei der konventionellen Fertigung von Radialreifen sind sämtliche Aufbautrommeln zylindrische Trommeln. Die Konturierung des aus mindestens zwei Lagen und der Bandage bestehenden Gürtelverbandes erfolgt daher erst während der Vulkanisation des Reifens in einer Reifenheizform durch das Einformen des Reifenrohlings mittels eines im Inneren des Rohlings eingebrachten und aufgeblähten Balges. Dabei werden dem Gürtelverband und auch dem Laufstreifen ihre endgültige Kontur verliehen, indem der Reifenrohling unter einer gewissen Ausdehnung, der Resterhebung, die auch den Gürtelverband erfasst, in die Form hinein gepresst wird. Die Resterhebung ist im Zenit des Reifens zumeist größer als in den Schulterbereichen. Über den Reifenquerschnitt erfolgt somit eine ungleichmäßige Dehnung des Materials im Reifen, insbesondere der Festigkeitsträger in den Gürtellagen und der Bandage, die im Allgemeinen als Spulbandage aufgebracht wird. Die ungleichmäßige Dehnung hat eine Materialverschiebung der Gürtellagen relativ zu den anderen Bauteilen zur Folge, insbesondere eine Änderung des Winkels der Festigkeitsträger in den Gürtellagen über den Reifenquerschnitt, ein Einspringen der Gürtellagen radial innerhalb der auf den Gürtel aufgebrachten Bandage sowie eine ungleichmäßige Spannungsverteilung der außerhalb des Gürtels befindlichen Festigkeitsträger.

Aus der EP 0 465 828 A sind ein Verfahren und eine Vorrichtung zur Herstellung von Gürtelpaketen von Fahrzeugluftreifen bekannt, bei welchen die einzelnen Lagen eines Gürtels auf einer ersten Gürteltrommel gewickelt werden, danach eine zweite Gürteltrommel in die erste Gürteltrommel verfahren wird und die Segmente der zweiten Gürteltrommel das Lagenpaket erfassen. Die beiden Gürteltrommeln werden voneinander entfernt und auf der ersten Gürteltrommel kann das nächste Lagenpaket erstellt werden. Auf der zweiten Gürteltrommel wird das erste Lagenpaket zu einem kompletten Laufstreifen/Gürtelpaket vervollständigt. Bei ineinander gefahrenen Gürteltrommeln wird die in die erste Trommel axial hineingefahrene zweite Trommel expandiert, damit deren Segmente das Lagenpaket erfassen können. Die zweite Gürteltrommel kann ferner einen zylindrischen Mittelabschnitt mit größerem Durchmesser und kegelige oder kugelige Randabschnitte aufweisen.

Bekannt sind ferner Verfahren und Vorrichtungen zum Aufbauen eines Reifenrohlings auf einem segmentierten, stabilen Kern, dessen Außenfläche bereits konturiert ist und an die Innenfläche des aufzubauenden Reifens entsprechend angepasst ist. Diesbezüglich wird beispielsweise auf die US 5,616,209 und die WO 03/055667 A verwiesen. Bei diesen bekannten Verfahren werden die meisten Bauteile des Reifens aus streifenförmigen Ausgangsmaterialen und aus textilen oder metallischen Fäden durch Aufbringen bzw. Aufwickeln mittels besonderer Vorrichtungen erstellt. Der Reifen wird mitsamt dem stabilen Kern und daher balglos geheizt, es findet somit keine Resterhebung während der Vulkanisation statt. Diese Verfahren sind technisch sehr aufwändig.

Der Erfindung liegt die Aufgabe zugrunde, ein Verfahren und eine Vorrichtung zur Verfügung zu stellen, mit welchen die Gürtellagen beim Aufbau des Reifens auf herkömmliche Weise aufgebracht werden können und auf einfache Weise ein mechanisch vorkonturierter Gürtelverband erstellt werden kann. Dabei sollen ein automatisches Spleißen der Gürtellagen sowie eine Einbindung des Verfahrens und der Vorrichtung in einen konventionellen Aufbauprozess möglich sein.

Was das Verfahren betrifft wird die gestellte Aufgabe erfindungsgemäß dadurch gelöst, die zweite Gürteltrommel einen konturiert ausgeführten Außenumfang aufweist, welcher an die erwünschte Kontur bzw. Querschnittsform des Gürtels im fertigen Reifen angepasst ist, wobei die Gürtellagen an diese Kontur angepasst werden, indem sie durch Expansion der Gürteltrommel gedehnt und/oder indem sie durch von außen einwirkenden Druck gestaucht werden.

Was die Vorrichtung betrifft wird die gestellte Aufgabe erfindungsgemäß dadurch gelöst, dass die andere Gürteltrommel einen konturiert ausgeführten Außenumfang aufweist, welcher an die erwünschte Kontur bzw. Querschnittsform des Gürtels im fertigen Reifen angepasst ist, wobei die Vorrichtung eine Dreheinrichtung zum Tauschen der Positionen der beiden Gürteltrommeln und einen Gürteltragering zur Aufnahme und zum Transferieren der Gürtellagen bzw. des Gürtelverbandes von der einen Gürteltrommel zur anderen Gürteltrommel aufweist.

Somit kann gemäß der Erfindung bereits während des Reifenaufbaus ein Ausformen eines Gürtelverbandes aus herkömmlichen Gürtellagen erfolgen. Bei der Vulkanisation des fertig aufgebauten Rohreifens in einer herkömmlichen Heizform wird beim Einformen das Gürtelpaket, insbesondere die Bandage, gezielt und im Wesentlichen gleichmäßig gedehnt. Der fertige Reifen ist daher von seinen Eigenschaften wesentlich leichter einstellbar als ein herkömmlich aufgebauter Reifen, insbesondere lassen sich durch die Wahl der Kontur der zweiten Gürteltrommel die Bodenaufstandsfläche, das dynamische Wachstum und die dynamische Kontur wesentlich besser vorherbestimmen als beim herkömmlichen Reifenaufbau.

Bei einer besonders rationellen und einfachen Ausführungsform der Erfindung werden die Gürtellagen als Gürtelverband zur zweiten konturiert ausgeführten Gürteltrommel transferiert und hier positioniert.

Alternativ dazu können die Gürtellagen einzeln zur zweiten, konturiert ausgeführten Gürteltrommel transferiert und hier positioniert werden. Bei dieser Verfahrensvariante besteht daher die Möglichkeit, beispielsweise auf die erste auf der konturierten Gürteltrommel befindlichen Gürtellage eine verstärkende Lage, insbesondere durch Spulen bzw. Umwickeln eines Festigkeitsträger enthaltenden Materialstreifens, aufzubringen.

Eine Möglichkeit der Konturierung durch Stauchen besteht darin, dass die konturierte Gürteltrommel mit aufgelegten Gürtellagen in eine Position expandiert wird, in welcher ihr Durchmesser im Zenit höchstens dem Innendurchmesser der radial inneren Gürtellage entspricht und anschließend die Gürtellagen von außen auf die Trommeloberfläche gedrückt und derart gestaucht werden.

Eine Konturierung durch Dehnung kann auf einfache Weise derart durchgeführt werden, dass die konturierte Gürteltrommel bei über ihr positionierten Gürtellagen in eine Position expandiert wird, in welcher ihr Durchmesser in den Schulterbereichen dem Innendurchmesser der radial inneren Gürtellage entspricht, sodass durch den Expansionsvorgang die Gürtellagen durch Dehnung konturiert werden.

Es gibt auch die Möglichkeit, die Gürtellagen sowohl zu stauchen als auch zu dehnen, indem die konturierte Gürteltrommel bei über ihr positionierten Gürtellagen in eine Position expandiert wird, in welcher ihr Durchmesser im Zenit größer, in den Schulterbereichen jedoch kleiner ist als der Innendurchmesser der inneren Gürtellage, sodass die Gürtellagen im Zenit durch Dehnung gestaucht werden, in den Schulterbereichen von außen an die Trommeloberfläche gedrückt und hier durch Stauchen konturiert werden.

Ein Stauchen der Gürtellagen ist auf unterschiedliche Arten möglich. Eine besonders zweckmäßige und einfache Möglichkeit besteht darin, an der Innenseite des Gürteltrageringes eine Einrichtung anzuordnen, mittels welcher das Stauchen durchgeführt wird. Eine derartige Einrichtung kann beispielweise eine am Gürteltragering angeordnete, mit Luft befüllbare Manschette oder ein am Gürteltragering angeordneter, mit Luft befüllbarer Balg sein, der bzw. dessen den Gürtellagen zugewandte Seite im aufgeblähten Zustand die erwünschte Außenkontur annimmt.

Eine besonders einfache Einrichtung besteht in einem an der Innenseite des Gürteltrageringes angeordneten elastisch verformbaren Belag.

Eine weitere, sehr zweckmäßige Möglichkeit des Stauchens besteht darin, die Gürtellagen durch Umwickeln mit einer Bandage aus einem streifenförmigen, Festigkeitsträger enthaltenden Materialstreifen zu stauchen und derart zu konturieren.

Es ist in jedem Fall günstig, die, sei es durch Stauchen oder durch Dehnen, erzielte Kontur der Gürtellagen zu fixieren. Hier bietet es sich an, die Gürtellagen durch Umwickeln mit einer Bandage aus einem streifenförmigen, Festigkeitsträger enthaltenden Materialstreifens zu fixieren.

Auf der konturierten Gürteltrommel kann ferner, bevor die Gürtellagen positioniert werden, bereits eine verstärkende Lage, insbesondere durch Umwickeln eines Festigkeitsträger aufweisenden Materialstreifens, aufgebracht werden. Werden die Gürtellagen einzeln zur konturierten Bautrommel transferiert so ist es möglich, bereits auf die erste auf die konturierte Bautrommel aufgebrachte Gürtellage ebenfalls eine verstärkende Lage, vorzugsweise durch Umwickeln eines Festigkeitsträger enthaltenden Materialstreifens, aufzubringen.

Für einen rationellen Ablauf des Verfahrens ist es von Vorteil, wenn die gespleißten Gürtellagen bzw. der Gürtelverband mittels eines Gürteltrageringes zwischen den Gürteltrommeln transferiert, bei Bedarf in einer Warteposition positioniert und nach Konturierung zu einer Bombierstation zum Zusammenfügen des Gürtelverbandes mit einer Reifenkarkasse transportiert werden bzw. wird.

Weitere Merkmale, Vorteile und Einzelheiten der Erfindung werden nun anhand der Zeichnung, die in schematischen Darstellungen Ausführungsbeispiele zeigt, näher beschrieben. Dabei zeigen

Fig. 1 einen Querschnitt durch die Hälfte eines Fahrzeugluftreifens.

Fig. 2 bis Fig. 10 aufeinander folgende Schritte beim Aufbau eines Radialreifens und

Fig. 11 eine der Möglichkeiten der Erstellung eines konturierten Gürtels.

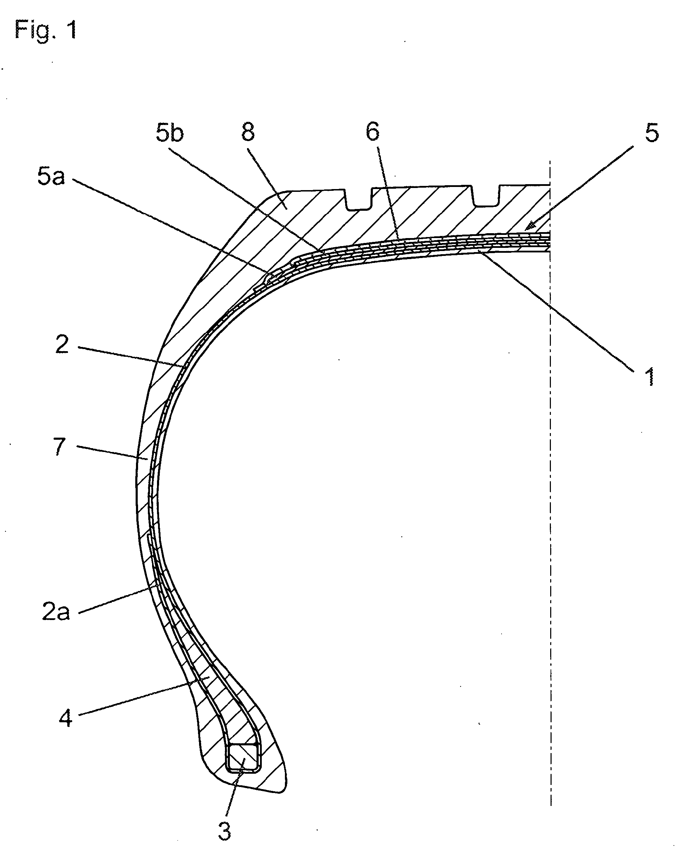

Der in Fig. 1 beispielhaft im Teilquerschnitt gezeigte Radialreifen für Personenkraftwagen weist als Hauptbestandteile eine luftdichte Innenschicht 1, eine Karkasseinlage 2, Wulstbereiche mit Wulstkernen 3 und Kernprofilen 4, einen Gürtelverband 5, welcher beispielsweise aus zwei Gürtellagen 5a, 5b und einer Bandage 6 besteht, ferner zwei Seitenwände 7 und einen profilierter Laufstreifen 8 auf. Die Bandage 6 ist eine "Spulbandage" und wird durch spiraliges Wickeln eines Materialstreifens erstellt, welcher in eine Gummimatrix eingebettete parallele Festigkeitsträgerfäden, welche üblicherweise aus einem textilen Material, beispielsweise Nylon oder Aramid, bestehen, aufweist. Die Karkasseinlage 2 weist insbesondere textile Festigkeitsträger auf und ist eine Radialkarkasse, bei der die Festigkeitsträger zumindest im Wesentlichen in radialer Richtung verlaufen. Die Karkasseinlage 2 ist von radial innen nach radial außen um die Wulstkerne 4 herumgeschlungen, sodass ihre freien Endabschnitte die sogenannten Hochschläge 2a bilden. Die Wulstkerne 3 können aus einem oder mehreren Stahlseil(en) bestehen, die auf ihnen sitzenden Kernprofile 4 bestehen aus einer relativ harten Gummimischung. Bei der Reifenherstellung bzw. dem Aufbau des Reifens aus seinen Bauteilen werden die Wulstkerne 3 gemeinsam mit den noch unvulkanisierten Kernprofilen 4 meist als Einheit vorgefertigt und können ferner mit einer ein- oder mehrlagigen äußeren Umhüllung aus einem gummierten Gewebe, den Wulstschutzstreifen, versehen sein.

Gemäß der Erfindung wird ein Reifen, wie er in Fig. 1 beispielhaft gezeigt ist, bereits beim Aufbau konturiert, indem der Rohreifen derart und mit solchen Einrichtungen hergestellt wird, dass seine Querschnittskontur möglichst weitgehend, insbesondere im Bereich des Gürtels und des Laufstreifens, bereits der Fertigreifenkontur bzw. dem Fertigreifenquerschnitt entspricht bzw. an diesen angepasst ist. Die Gürtellagen 5a, 5b werden auf herkömmliche Weise aufgebaut, ihr Ausgangsmaterial sind abgelängte Abschnitte von Bahnen aus in eine Kautschukmischung eingebetteten Stahlkordfestigkeitsträgern.

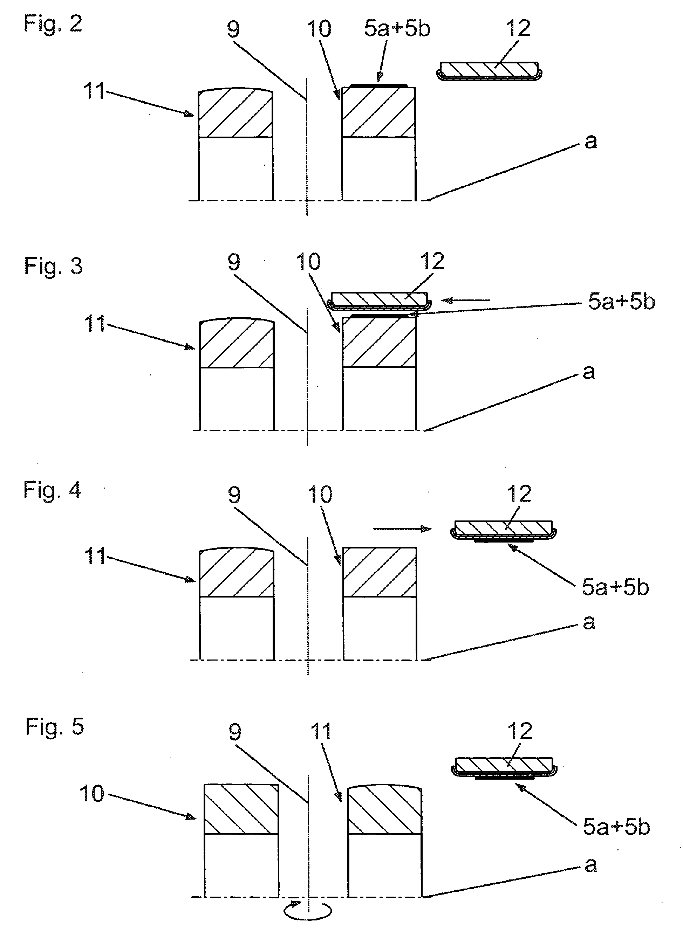

Fig. 2 bis 11 zeigen eine bevorzugte Ausführungsform des Aufbaus und der Konturierung des Gürtelverbandes anhand einer schematisch dargestellten Gürtelstation mit zwei Gürteltrommeln 10, 11. Die strichlierte Linie a verdeutlicht die Rotationsachse der Trommeln 10, 11, die punktierte Linie verdeutlicht die Position einer senkrecht zur Rotationsachse verlaufenden Drehachse 9, welche Bestandteil einer nicht gezeigten Dreheinrichtung ist und um welche die beiden Gürteltrommeln 10, 11 derart drehbar sind, dass sie ihre Positionen tauschen können. Mit der Bezugsziffer 12 ist ein Gürteltragering bezeichnet, welcher in nicht dargestellter Weise segmentiert ausgeführt ist, sodass sein Innendurchmesser durch Expandieren und Einfahren veränderbar ist. Der Gürteltragering 12 weist ferner nicht dargestellte und in an sich bekannter Weise ausführbare Klemmeinrichtungen auf. Unterhalb von a befinden sich die zweiten nicht gezeigten Hälften der Trommeln 10,11. Vom Gürteltragering 12 ist auch nur ein Schnitt durch die eine Hälfte dargestellt..

Die beiden Gürteltrommeln 10, 11 sind in an sich bekannter Weise segmentiert und daher expandier- und einfahrbar. Die Gürteltrommel 10 ist mit einem zylindrischen Außenumfang versehen, die Gürteltrommel 11 ist konturiert ausgeführt, ihr Außenumfang ist an die erwünschte Kontur bzw. die Querschnittsform des Gürtels im fertigen Reifens angepasst.

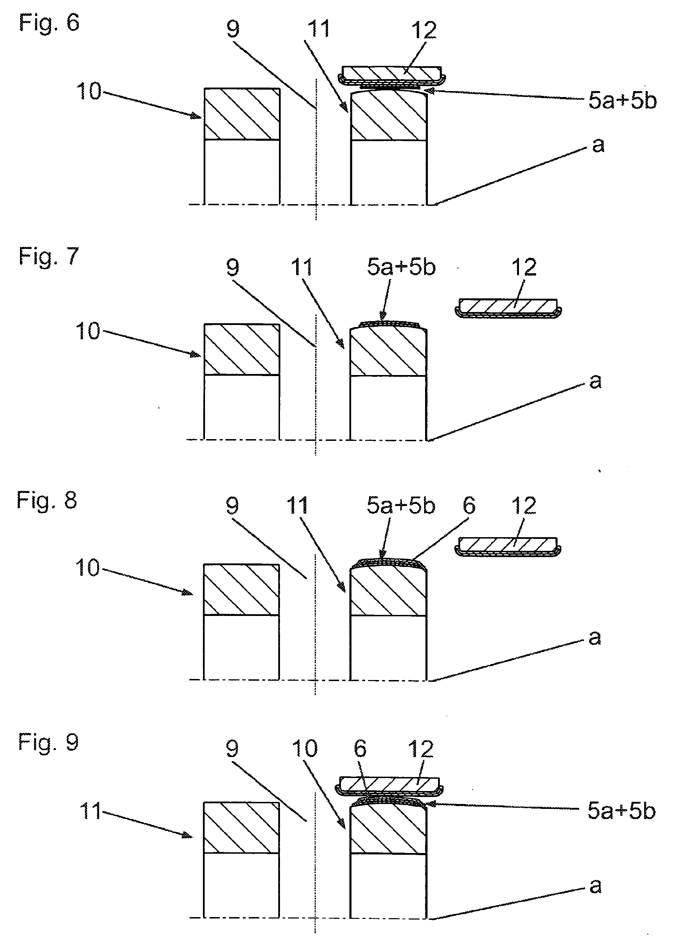

Auf die zylindrische Gürteltrommel 10 werden vorerst die Materialbahnen für die erste und die zweite Gürtellage 5a, 5b nacheinander aufgelegt und automatisch gespleißt (Fig. 2). Anschließend wird der Gürteltragering 12 über der Gürteltrommel 10 positioniert (Fig. 3) und zum Erfassen der beiden gespleißten Gürtellagen 5a, 5b eingefahren. Die beiden Gürtellagen 5a, 5b werden an der Innenseite des Gürteltrageringes 12 geklemmt und der Gürteltragering 12 wird seitlich in eine Warteposition gebracht (Fig. 4). Im nächsten Verfahrensschritt werden die Positionen der beiden Gürteltrommeln 10, 11 durch ein Drehen um die Achse 9 vertauscht, sodass sich nun die konturierte Gürteltrommel 11 neben dem in Warteposition befindlichen Gürteltragering 12 befindet (Fig. 5). Nun wird der Gürteltragering 12 über der Gürteltrommel 11 positioniert (Fig. 6) und die beiden Gürtellagen 5a, 5b werden auf der Gürteltrommel 11, wie weiter unten noch beschrieben wird, konturiert. Entweder vor oder nach dem Konturiervorgang, je nachdem auf welche Art und Weise dieser durchgeführt wird, wird der Gürteltragering 12 ohne Gürtellagen in eine seitliche Warteposition gefahren. Fig. 7 zeigt den bereits konturierten Gürtel mit dem in seitlicher Warteposition befindlichen Gürteltragering 12.

Nun wird der Gürtelverband fertiggestellt, in dem eine Bandage 6 (Spulbandage) aufgebracht wird (Fig. 8). Diese wird bei rotierender Gürteltrommel 11 durch ein kontinuierliches spiraliges Wickeln eines oder mehrerer Materialstreifen erstellt, wobei jeder Streifen aus in eine Gummimischung eingebetteten und in Längsrichtung des Streifens verlaufenden textilen Festigkeitsträgern, beispielsweise Nylonfäden, besteht. Pro Zentimeter Streifenbreite sind insbesondere 7 bis 12 Fäden vorgesehen, der Streifen selbst hat üblicherweise eine Breite von 5 bis 15mm und wird über eine geeignete Einrichtung automatisch zugeführt. Die Bandage 6 kann abschnittsweise oder über die gesamte Breite des Gürtels aufgebracht werden, es ist auch das Aufbringen mehrerer Lagen möglich. Die Art der Wicklung und das Spulbild sind nicht Gegenstand der Erfindung. Der Gürtelverband kann mit einem Laufstreifen komplettiert oder ohne Laufstreifen weiterverarbeitet werden.

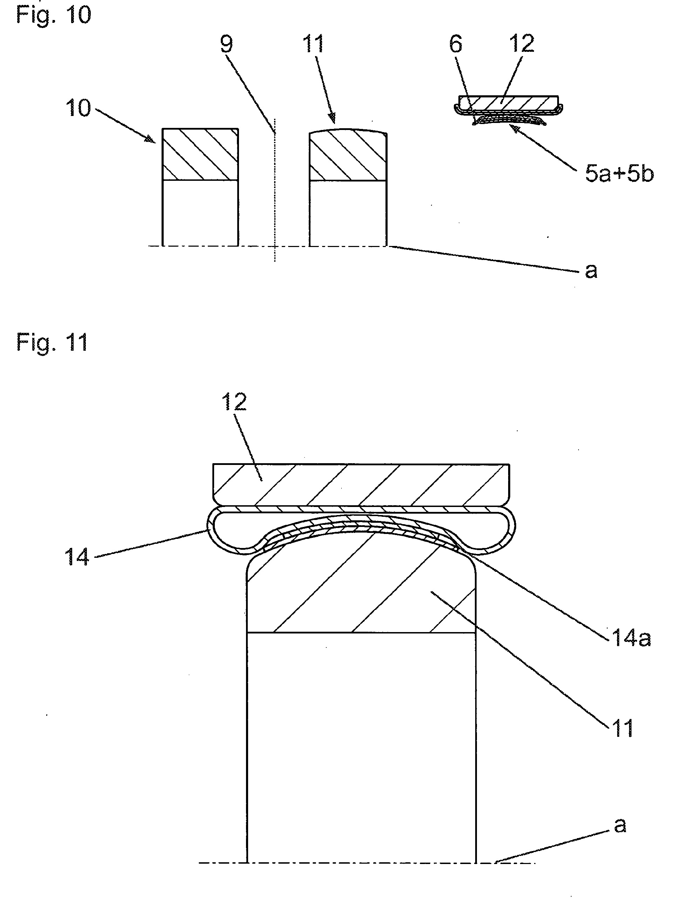

Nach dem Erstellen der Bandage 6 wird der Gürteltragering 12 über der Gürteltrommel 11 positioniert und der fertiggestellte Gürtelverband 5 von diesem aufgenommen (Fig. 9). Die Segmente der Gürteltrommel 11 werden eingefahren, sodass der Gürteltragering 12 mitsamt dem Gürtelverband zu einer nicht dargestellten Bombierstation transportiert werden kann (Fig. 10). Der Gürtelverband wird nun über einer bereits aufgebauten Reifenkarkasse positioniert, die Karkasse durch Bombieren in den Gürtelverband expandiert und mit diesem verbunden. Der Rohreifen wird komplettiert, indem die Karkasshochschläge erstellt werden und ggf. der Laufstreifen sowie gegebenenfalls die Seitenwände 7, beispielweise durch Aufspulen eines Materialstreifens, aufgebracht werden.

Die erwähnte Reifenkarkasse wird auf einer nicht dargestellten Einrichtung, die herkömmlich ausgeführt sein kann, aufgebaut. Diese Einrichtung kann eine zylindrische Aufbautrommel aufweisen, auf welcher die Karkasse, bestehend aus der Innenschicht 1, der Karkasseinlage 2, den Wulstkernen 3 mit Kernprofilen 4 und gegebenenfalls den Seitenwänden 7, aufgebaut wird.

Fig. 11 zeigt eine der bevorzugten Möglichkeiten der Konturgebung der Gürtellagen 5a, 5b. Die Gürteltrommel 11 ist derart weit expandiert, dass ihr Durchmesser im Zenit dem Innendurchmesser der radial inneren Gürtellage 5a und damit auch dem Außendurchmesser der Gürteltrommel 10 entspricht. Der Gürteltragering 12 trägt an seinem Innenumfang eine ein- oder mehrteilige, mit Luft befüllbare, insbesondere aus Gummi bestehende Manschette 14, deren Innenseite 14a im aufgeblähten Zustand die erwünschte Außenkontur des Gürtelverbandes annimmt. Die Konturierung der Gürtellagen 5a, 5b erfolgt daher durch ihr Stauchen auf die Bautrommeloberfläche.

Anstelle einer aufblasbaren Manschette kann der Gürteltragering 12 innenseitig mit einem elastischen Belag versehen sein, welcher sich entsprechend verformt, wenn vom Gürteltragering 12 auf die Außenseite der Gürtellagen 5a, 5b Druck ausgeübt wird.

Auch das Aufbringen der Bandage 6 kann dafür verwendet werden, den Gürtelverband 5 über seine Breite auf die Bautrommeloberseite zu stauchen und derart zu konturieren.

Eine weitere Möglichkeit der Konturierung der Gürtellagen 5a, 5b besteht in ihrer Dehnung. Die Gürteltrommel 11 wird derart expandiert, dass ihr Durchmesser in den Schulterbereichen dem Innendurchmesser der radial inneren Gürtellage 5a und somit auch dem Durchmesser der Gürteltrommel 10 entspricht. Die Gürtellagen 5a, 5b werden dabei durch Expansion der Gürteltrommel 11 über die gesamte Trommelbreite gedehnt und derart konturiert. Bei dieser Ausführung wird der Gürteltragering 12 in eine Warteposition verfahren bevor die Gürteltrommel 11 expandiert wird.

Die Gürteltrommel 11 kann ferner gemäß einer weiteren Variante derart expandiert werden, dass im expandierten Zustand ihr Durchmesser im Zenit größer, in den Schulterbereichen jedoch kleiner ist als der Innendurchmesser der inneren Gürtellage 5a. Durch Expansion der Gürteltrommel 11 werden daher die Gürtellagen 5a, 5b im Zenit gedehnt, in den Schulterbereichen durch von außen wirkende Maßnahmen gestaucht. Zum Stauchen kann analog zu Fig. 11 der Gürteltragering 12, welcher mit einer mit Luft befüllbaren Manschette oder einem elastischen Belag versehen ist, verwendet werden. Ein Stauchen in den Schulterbereichen ist auch durch seitliche Bandagierung denkbar, wobei sich der Gürteltragering in einer Warteposition befindet.

Ein Sonderfall der Konturierung durch Stauchen liegt dann vor, wenn der Durchmesser der expandierten Gürteltrommel 11 im Zenit kleiner ist als der Innendurchmesser der inneren Gürtellage 5a und somit auch kleiner ist als der Durchmesser der Gürteltrommel 10. Die Gürtellagen 5a, 5b können, wie oben beschrieben, mit Hilfe des Gürteltrageringes 12 und der auf ihm befindlichen mit Luft befüllbaren Manschette oder des elastischen Belags oder durch Spulen der Bandage konturiert werden. Diese Ausführungsvariante erlaubt es, bereits vor dem Transferieren der gespleißten Gürtellagen 5a, 5b auf der konturierten Gürteltrommel 11 eine verstärkende Lage, insbesondere durch Spulen eines Bandage-Materialstreifens, aufzubringen. Es ist ferner möglich, die beiden Gürtellagen 5a, 5b einzeln auf die Bautrommel 10 aufzulegen und zu spleißen und einzeln von der Bautrommel 10 auf die konturierte Bautrommel 11 zu transferieren, sodass hier auf die erste Gürtellage 5a bereits eine Verstärkungslage, ebenfalls als gewickelte Bandage, aufgebracht werden kann, bevor die zweite Gürtellage 5b positioniert wird.

Ein Konturieren durch Stauchen kann durch zusätzliche Maßnahmen unterstützt werden. Diese können innerhalb der konturierten Gürteltrommel 11 untergebrachte Magnete sein, welche die Stahlcorde in den Gürtellagen 5a, 5b Richtung Gürteltrommeloberseite ziehen. Denkbar ist es auch, die Gürteltrommel 11 mit einer Saugeinrichtung zu versehen, welche die Gürtellagen 5a, 5b von innen her ansaugt.

Der erwähnt elastische Belag auf den Gürteltrageringsegmenten kann beispielsweise ein Schaumstoff sein.

Die Gürteltrommel 11 kann auf verschiedene Weisen die erwünschte Außenkontur erhalten. Möglich ist es, über eine metallische zylindrische Gürteltrommel bzw. deren Segmente eine Gummimanschette oder eine konturierte Manschette aus einem elastischen Material zu ziehen. Auch eine Ausführung der Segmente in konturierter Form ist denkbar. Schließlich ist es auch möglich, eine zylindrische Gürteltrommel mit einem Balg zu überziehen, der, mit Luft befüllt, die erwünschte Kontur annimmt.

## Patentansprüche

1. Verfahren zum Aufbauten eines Radialreifens mit einer luftdichten Innenschicht (1), zumindest einer Karkasseinlage (2), Wulstkernen (3) mit Kernprofilen (4), Seitenwänden (7), einem Laufstreifen (8) und einem mindestens zwei Gürtellagen (5a, 5b) sowie eine Bandage (6) aufweisenden Gürtelverband (5), wobei die Gürtellagen (5a, 5b) zunächst auf einer expandierbaren, zylindrischen Gürteltrommel (10) zylindrisch aufgebaut und gespleißt werden und anschließend zu einer zweiten, expandierbaren Gürteltrommel (11) transferiert werden,
**dadurch gekennzeichnet,**
**dass** die zweite Gürteltrommel (11) einen konturiert ausgeführten Außenumfang aufweist, welcher an die erwünschte Kontur bzw. Querschnittsform des Gürtels im fertigen Reifen angepasst ist, wobei die Gürtellagen (5a, 5b) an diese Kontur angepasst werden, indem sie durch Expansion der Gürteltrommel (11) gedehnt und/oder indem sie durch von außen einwirkenden Druck gestaucht werden.

2. Verfahren nach Anspruch 1, **dadurch gekennzeichnet, dass** die Gürtellagen (5a, 5b) als Gürtelverband zur zweiten konturiert ausgeführten Gürteltrommel (11) transferiert und hier positioniert werden.

3. Verfahren nach Anspruch 1, **dadurch gekennzeichnet, dass** die Gürtellagen (5a, 5b) einzeln zur zweiten, konturiert ausgeführten Gürteltrommel (11) transferiert und hier positioniert werden.

4. Verfahren nach einem der Ansprüche 1 bis 3, **dadurch gekennzeichnet, dass** die konturierte Gürteltrommel (11) mit aufgelegten Gürtellagen (5a, 5b) in eine Position expandiert wird, in welcher ihr Durchmesser im Zenit höchstens dem Innendurchmesser der radial inneren Gürtellage (5a) entspricht und anschließend die Gürtellagen von außen auf die Trommeloberfläche gedrückt und derart gestaucht werden.

5. Verfahren nach einem der Ansprüche 1 bis 3, **dadurch gekennzeichnet, dass** die konturierte Gürteltrommel (11) bei über ihr positionierten Gürtellagen (5a, 5b) in eine Position expandiert wird, in welcher ihr Durchmesser in den Schulterbereichen dem Innendurchmesser der radial inneren Gürtellage (5a) entspricht und derart die Gürtellagen (5a, 5b) durch Dehnung konturiert werden.

6. Verfahren nach einem der Ansprüche 1 bis 3, **dadurch gekennzeichnet, dass** die konturierte Gürteltrommel (11) bei über ihr positionierten Gürtellagen (5a, 5b) in eine Position expandiert wird, in welcher ihr Durchmesser im Zenit größer, in den Schulterbereichen jedoch kleiner ist als der Innendurchmesser der inneren Gürtellage (5a), sodass die Gürtellagen (5a, 5b) im Zenit durch Dehnung konturiert werden, in den Schulterbereichen von außen an die Trommeloberfläche gedrückt und hier durch Stauchen konturiert werden.

7. Verfahren nach einem der Ansprüche 1 bis 4 oder 6, **dadurch gekennzeichnet, dass** das Stauchen der Gürtellagen (5a, 5b) mittels einer an der Innenseite des Gürteltrageringes (12) angeordneten Einrichtung durchgeführt wird.

8. Verfahren nach Anspruch 7, **dadurch gekennzeichnet, dass** die Einrichtung eine am Gürteltragering (12) angeordnete, mit Luft befüllbare Manschette (14) bzw. einen am Gürteltragering (12) angeordneten mit Luft befüllbaren Balg aufweist, deren bzw. dessen den Gürtellagen (5a, 5b) zugewandte Seite im aufgeblähten Zustand die erwünschte Außenkontur annimmt.

9. Verfahren nach Anspruch 7, **dadurch gekennzeichnet, dass** die Einrichtung einen an der Innenseite des Gürteltrageringes (12) angeordneten elastisch verformbaren Belag aufweist.

10. Verfahren nach Anspruch 4 oder 6, **dadurch gekennzeichnet, dass** die Gürtellagen (5a, 5b) durch Umwickeln mit einer Bandage (6) aus einem streifenförmigen, Festigkeitsträger enthaltenden Materialstreifen gestaucht und derart konturiert werden.

11. Verfahren nach einem der Ansprüche 1 bis 10, **dadurch gekennzeichnet, dass** die Kontur der Gürtellagen (5a, 5b) durch Umwickeln mit einer Bandage (6) aus einem streifenförmigen, Festigkeitsträger enthaltenden Materialstreifen fixiert wird.

12. Verfahren nach einem der Ansprüche 1, 2 oder 4, **dadurch gekennzeichnet, dass** auf die konturierte Gürteltrommel (11) vor dem Positionieren der gespleißten Gürtellagen (5a, 5b) eine verstärkende Lage, insbesondere durch Umwickeln eines Festigkeitsträger aufweisenden Materialstreifens, aufgebracht wird.

13. Verfahren nach einem der Ansprüche 1, 2 oder 4, **dadurch gekennzeichnet, dass** auf die erste auf der konturierten Bautrommel (11) aufgebaute Gürtellage (5a) und/oder als äußerste Lage eine verstärkende Lage, insbesondere durch Umwickeln eines Festigkeitsträger enthaltenden Materialstreifens, aufgebracht wird.

14. Verfahren nach einem der Ansprüche 1 bis 13, **dadurch gekennzeichnet, dass** die gespleißten Gürtellagen (5a, 5b) bzw. der Gürtelverband (5) mittels eines Gürteltrageringes (12) zwischen den Gürteltrommeln (10, 11) transferiert, bei Bedarf in einer Warteposition positioniert und nach Konturierung zu einer Bombierstation zum Zusammenfügen des Gürtelverbandes (5) mit einer Reifenkarkasse transportiert werden bzw. wird.

15. Vorrichtung zum Aufbauen eines Radialreifens mit einer luftdichten Innenschicht (1), zumindest einer Karkasseinlage (2), Wulstkernen (3) mit Kernprofilen (4), Seitenwänden (7), einem Laufstreifen (8) und einem mindestens zwei Gürtellagen (5a, 5b) sowie eine Bandage (6) aufweisenden Gürtelverband (5), welche Vorrichtung eine Gürtelstation mit zwei expandierbaren Gürteltrommeln (10, 11) aufweist, von welchen die eine zylindrisch ausgeführt ist,
**dadurch gekennzeichnet,**
**dass** die andere Gürteltrommel (11) einen konturiert ausgeführten Außenumfang aufweist, welcher an die erwünschte Kontur bzw. Querschnittsform des Gürtels im fertigen Reifen angepasst ist, wobei die Vorrichtung eine Dreheinrichtung zum Tauschen der Positionen der beiden Gürteltrommeln (10, 11) und einen Gürteltragering (12) zur Aufnahme und zum Transferieren der Gürtellagen (5a, 5b) bzw. des Gürtelverbandes (5) von der einen Gürteltrommel (10) zur anderen Gürteltrommel (11) aufweist.

16. Vorrichtung nach Anspruch 15, **dadurch gekennzeichnet, dass** die konturierte Gürteltrommel (11) derart expandierbar ist, dass die auf ihr positionierten Gürtellagen (5a, 5b) zumindest im Zenitbereich durch Dehnung konturierbar sind.

17. Vorrichtung nach Anspruch 15, **dadurch gekennzeichnet, dass** eine von außen auf den auf der konturierten Gürteltrommel (11) positionierten Gürtelverband (5) wirkende Einrichtung vorgesehen ist, welche den Gürtelverband (5) zumindest in den Schulterbereichen durch Stauchen konturiert bzw. an die Außenkontur der Gürteltrommel (11) anpasst.

18. Vorrichtung nach Anspruch 17, **dadurch gekennzeichnet, dass** die Einrichtung eine am Gürteltragering (12) angeordnete, aufblasbare, den Gürtelverband (5) umhüllbare Gummimanschette (14) oder einen am Gürteltragering (12) angeordneten, aufblasbaren Balg aufweist, welche bzw. welcher im aufgeblasenen Zustand eine der erwünschten Querschnittskontur des Gürtelverbandes (5) entsprechende Innenkontur annimmt.

19. Vorrichtung nach Anspruch 17, **dadurch gekennzeichnet, dass** die Einrichtung einen an der Innenseite des Gürteltrageringes (12) angeordneten elastisch verformbaren Belag aufweist.

## Claims

1. Method for building a radial tyre with an airtight inner layer (1), at least one carcass inlay (2), bead cores (3) with bead fillers (4), sidewalls (7), a tread rubber (8) and a breaker belt assembly (5), comprising at least two belt plies (5a, 5b) and a bandage (6), the belt plies (5a, 5b) first being cylindrically built up on an expandable, cylindrical belt drum (10) and spliced, and subsequently transferred to a second, expandable belt drum (11), **characterized in that** the second belt drum (11) has an outer circumference of a contoured configuration which is adapted to the desired contour or cross-sectional form of the breaker belt in the finished tyre, the belt plies (5a, 5b) being adapted to this contour **in that** they are stretched by expansion of the belt drum (11) and/or are compressed by pressure acting from the outside.

2. Method according to Claim 1, **characterized in that** the belt plies (5a, 5b) are transferred as a breaker belt assembly to the second belt drum (11), of a contoured configuration, and are positioned there.

3. Method according to Claim 1, **characterized in that** the belt plies (5a, 5b) are transferred individually to the second belt drum (11), of a contoured configuration, and are positioned there.

4. Method according to one of Claims 1 to 3, **characterized in that** the contoured belt drum (11) with placed-on belt plies (5a, 5b) is made to expand into a position in which its diameter at the zenith corresponds at most to the inside diameter of the radially inner belt ply (5a), and the belt plies are subsequently pressed onto the surface of the drum from the outside and in this way compressed.

5. Method according to one of Claims 1 to 3, **characterized in that** the contoured belt drum (11) with the belt plies (5a, 5b) positioned over it is made to expand into a position in which its diameter in the shoulder regions corresponds to the inside diameter of the radially inner belt ply (5a), and the belt plies (5a, 5b) are in this way contoured by stretching.

6. Method according to one of Claims 1 to 3, **characterized in that** the contoured belt drum (11) with the belt plies (5a, 5b) positioned over it is made to expand into a position in which its diameter at the zenith is greater but in the shoulder regions is less than the inside diameter of the inner belt ply (5a), so that the belt plies (5a, 5b) at the zenith are contoured by stretching, in the shoulder regions are pressed against the surface of the drum from the outside and are contoured there by compressing.

7. Method according to one of Claims 1 to 4 or 6, **characterized in that** the compressing of the belt plies (5a, 5b) is carried out by means of a device arranged on the inner side of the belt carrying ring (12).

8. Method according to Claim 7, **characterized in that** the device has a cuff (14), which is arranged on the belt carrying ring (12) and can be filled with air, or a bladder, which is arranged on the belt carrying ring (12) and can be filled with air, the side of which cuff or bladder that is facing the belt plies (5a, 5b) assuming the desired outer contour in the inflated state.

9. Method according to Claim 7, **characterized in that** the device has an elastically deformable covering arranged on the inner side of the belt carrying ring (12).

10. Method according to Claim 4 or 6, **characterized in that** the belt plies (5a, 5b) are compressed by being wrapped around with a bandage (6) of a strip-like piece of material containing reinforcing elements, and are in this way contoured.

11. Method according to one of Claims 1 to 10,
**characterized in that** the contour of the belt plies (5a, 5b) is fixed by them being wrapped around with a bandage (6) of a strip-like piece of material containing reinforcing elements.

12. Method according to one of Claims 1, 2 or 4, **characterized in that**, before the positioning of the spliced belt plies (5a, 5b), a reinforcing ply is applied to the contoured belt drum (11), in particular by wrapping around a strip of material having reinforcing elements.

13. Method according to one of Claims 1, 2 or 4, **characterized in that** a reinforcing ply is applied to the first belt ply (5a) built up on the contoured building drum (11), and/or as an outermost layer, in particular by wrapping around a strip of material containing reinforcing elements.

14. Method according to one of Claims 1 to 13, **characterized in that** the spliced belt plies (5a, 5b) or the breaker belt assembly (5) are or is transferred between the belt drums (10, 11) by means of a belt carrying ring (12), if need be positioned in a waiting position and, after contouring, transported to a shaping station for joining together the breaker belt assembly (5) and a tyre carcass.

15. Apparatus for building a radial tyre with an airtight inner layer (1), at least one carcass inlay (2), bead cores (3) with bead fillers (4), sidewalls (7), a tread rubber (8) and a breaker belt assembly (5), comprising at least two belt plies (5a, 5b) and a bandage (6), which apparatus has a belt station with two expandable belt drums (10, 11), one of which is of a cylindrical configuration, **characterized in that** the other belt drum (11) has an outer circumference of a contoured configuration which is adapted to the desired contour or cross-sectional form of the breaker belt in the finished tyre, the apparatus having a turning device for changing over the positions of the two belt drums (10, 11) and a belt carrying ring (12) for receiving and transferring the belt plies (5a, 5b) or the breaker belt assembly (5) from one belt drum (10) to the other belt drum (11).

16. Apparatus according to Claim 15, **characterized in that** the contoured belt drum (11) can be made to expand in such a way that the belt plies (5a, 5b) positioned on it can be contoured by stretching, at least in the zenith region.

17. Apparatus according to Claim 15, **characterized in that** a device acting from the outside on the breaker belt assembly (5) positioned on the contoured belt drum (11) is provided and contours the breaker belt assembly (5), at least in the shoulder regions, by compressing, or adapts it to the outer contour of the belt drum (11).

18. Apparatus according to Claim 17, **characterized in that** the device has a rubber cuff (14), which is arranged on the belt carrying ring (12), can be inflated and can envelope the breaker belt assembly (5), or a bladder, which is arranged on the belt carrying ring (12) and can be inflated, which cuff or bladder in the inflated state assumes an inner contour corresponding to the desired cross-sectional contour of the breaker belt assembly (5).

19. Apparatus according to Claim 17, **characterized in that** the device has an elastically deformable covering arranged on the inner side of the belt carrying ring (12).

## Revendications

1. Procédé de montage d'un bandage radial de roue doté d'une couche intérieure (1) étanche à l'air, d'au moins une garniture de carcasse (2), d'âmes de bourrelet (3) dotées de profilés (4) d'âme, de parois latérales (7), d'une bande de roulement (8) et d'un ensemble de ceinture (5) qui présente au moins deux couches de ceinture (5a, 5b) ainsi qu'un bandage (6), les couches de ceinture (5a, 5b) étant d'abord montées en cylindre sur un tambour cylindrique expansible (10) de ceinture avant d'être ligaturées et ensuite transférées vers un deuxième tambour expansible (11) de ceinture,
**caractérisé en ce que**
la périphérie extérieure du deuxième tambour (11) de ceinture est dotée d'un contour adapté au contour souhaité ou à la forme de la section transversale de la ceinture dans le bandage de roue terminé, les couches de ceinture (5a, 5b) étant adaptées à ce contour en étant dilatées par dilatation du tambour (11) de ceinture ou écrasées par une poussée agissant de l'extérieur.

2. Procédé selon la revendication 1, **caractérisé en ce que** les couches de ceinture (5a, 5b) sont transférées sous la forme d'un ensemble de ceinture vers le deuxième tambour (11) de ceinture doté d'un contour avant d'y être positionnées.

3. Procédé selon la revendication 1, **caractérisé en ce que** les couches de ceinture (5a, 5b) sont transférées séparément vers le deuxième tambour (11) de ceinture doté d'un contour avant d'y être positionnées.

4. Procédé selon l'une des revendications 1 à 3, **caractérisé en ce que** le tambour (11) de ceinture doté d'un contour et sur lequel les couches de ceinture (5a, 5b) ont été placées est dilaté dans une position dans laquelle le diamètre à son zénith correspond au plus au diamètre intérieur de la couche radialement intérieure de ceinture (5a), les couches de ceinture étant ensuite refoulées de l'extérieur sur la surface du tambour pour être ainsi écrasées.

5. Procédé selon l'une des revendications 1 à 3, **caractérisé en ce qu'**après que les couches de ceinture (5a, 5b) ont été placées sur le tambour (11) de ceinture doté d'un contour, ce tambour est dilaté dans une position dans laquelle son diamètre dans les zones occupées par les épaulements correspond au diamètre intérieur de la couche radialement intérieure de ceinture (5a), les couches de ceinture (5a, 5b) étant ainsi dotées d'un contour par allongement.

6. Procédé selon l'une des revendications 1 à 3, **caractérisé en ce que** lorsque les couches de ceinture (5a, 5b) ont été placées sur le tambour (11) de ceinture doté d'un contour, le tambour est dilaté dans une position dans laquelle le diamètre à son zénith est supérieur au diamètre intérieur de la couche intérieure de ceinture (5a) mais est supérieur à ce dernier dans la zone occupée par les épaulements, de sorte que les couches de ceinture (5a, 5b) sont dotées d'un contour par dilatation au zénith et sont refoulées depuis l'extérieur sur la surface du tambour dans les zones occupées par les épaulements, pour y être dotées d'un contour par écrasement.

7. Procédé selon l'une des revendications 1 à 4 ou 6, **caractérisé en ce que** l'écrasement des couches de ceinture (5a, 5b) est réalisé au moyen d'un dispositif disposé sur le côté intérieur de l'anneau (12) porte-ceinture.

8. Procédé selon la revendication 7, **caractérisé en ce que** le dispositif présente une manchette (14) disposée sur l'anneau (12) porte-ceinture et apte à être remplie d'air ou un soufflet disposé sur l'anneau (12) porte-ceinture et apte à être rempli d'air, et dont le côté tourné vers les couches de ceinture (5a, 5b) prend le contour extérieur lorsqu'ils sont à l'état gonflé.

9. Procédé selon la revendication 7, **caractérisé en ce que** le dispositif présente une garniture élastiquement déformable disposée sur le côté intérieur de l'anneau (12) porte-ceinture.

10. Procédé selon les revendications 4 ou 6, **caractérisé en ce que** les couches de ceinture (5a, 5b) sont écrasées et ainsi dotées d'un contour par enroulement d'un bandage (6) constitué d'un ruban de matériau qui contient des renforts.

11. Procédé selon l'une des revendications 1 à 10, **caractérisé en ce que** le contour des couches de ceinture (5a, 5b) est fixé par enroulement d'un bandage (6) constitué d'un ruban de matériau qui contient des renforts.

12. Procédé selon l'une des revendications 1, 2 ou 4, **caractérisé en ce qu'**avant le positionnement des couches de ceinture (5a, 5b) ligaturées, une couche de renfort est appliquée sur le tambour (11) de ceinture doté d'un contour, en particulier par enroulement d'un ruban de matériau présentant des renforts.

13. Procédé selon l'une des revendications 1, 2 ou 4, **caractérisé en ce qu'**une couche de renfort est appliquée sur la première couche de ceinture (5a) montée sur le tambour de montage (11) doté d'un contour et/ou comme couche extérieure, en particulier en enroulant un ruban de matériau qui contient un renfort.

14. Procédé selon l'une des revendications 1 à 13, **caractérisé en ce que** les couches de ceinture (5a, 5b) ligaturées ou l'ensemble de ceinture (5) sont transférés entre les tambours (10, 11) de ceinture au moyen d'un anneau (12) porte-ceinture, sont si nécessaire placés dans une position d'attente et après transfert du contour, sont transportés vers un poste de bombage qui permet l'assemblage de l'ensemble de ceinture (5) sur une carcasse de bandage de roue.

15. Dispositif de montage d'un bandage radial de roue à couche intérieure (1) étanche à l'air, d'au moins une garniture de carcasse (2), d'âmes de bourrelet (3) dotées de profilés d'âme (4), de parois latérales (7), d'une bande de roulement (8) et d'un ensemble de ceinture (5) qui présente au moins deux couches de ceinture (5a, 5b) ainsi qu'un bandage (6), lequel dispositif présente un poste de ceinture doté de deux tambours expansibles (10, 11) de ceinture dont l'un a une configuration cylindrique,
**caractérisé en ce que**
la périphérie extérieure de l'autre tambour (11) de ceinture est dotée d'un contour qui est adapté au contour souhaité ou à la forme de la section transversale de la ceinture dans le bandage de roue terminé et **en ce que** le dispositif présente un dispositif de rotation qui échange les positions des deux tambours (10, 11) de ceinture et d'un anneau (12) porte-ceinture pour reprendre et transférer les couches de ceinture (5a, 5b) ou l'ensemble (5) de ceinture d'un tambour (10) de ceinture à l'autre tambour (11) de ceinture.

16. Dispositif selon la revendication 15, **caractérisé en ce que** le tambour (11) de ceinture doté d'un motif peut être dilaté de telle sorte qu'au moins dans la zone occupée par le zénith, les couches de ceinture (5a, 5b) qui y sont posées peuvent être dotées d'un contour par dilatation.

17. Dispositif selon la revendication 15, **caractérisé en ce qu'**il présente un dispositif qui agit de l'extérieur sur l'ensemble de ceinture (5) placé sur le tambour (11) de ceinture doté d'un contour et qui dote l'ensemble de ceinture (5) d'un contour par écrasement au moins dans les zones occupées par les épaulements ou l'adapte au contour extérieur du tambour (11) de ceinture.

18. Dispositif selon la revendication 17, **caractérisé en ce que** le dispositif présente une manchette en caoutchouc (14) gonflable, qui est capable d'entourer l'ensemble de ceinture (5) et qui est disposée sur l'anneau (12) porte-ceinture ou un soufflet gonflable disposé sur l'anneau (12) porte-ceinture, et qui, à l'état gonflé, prennent un contour intérieur qui correspond au contour souhaité de la section transversale de l'ensemble de ceinture (5).

19. Dispositif selon la revendication 17, **caractérisé en ce que** le dispositif présente une garniture élastiquement déformable disposée sur le côté intérieur de l'anneau (12) porte-ceinture.
